# FASCICULE DE BREVET EUROPEEN

(11) **EP 3 169 907 B1**
(45) Date de publication et mention de la délivrance du brevet: **22.12.2021**
(21) Numéro de dépôt: 15742354.2
(22) Date de dépôt: 29.06.2015
(51) Int. Cl.: F16C 33/20, F16C 29/02, F16C 17/00, F16C 17/02

(54) **PIÈCE COMPOSITE DE FROTTEMENT AUTOLUBRIFIANTE**
REIBUNGSTEIL AUS SELBSTSCHMIERENDEM VERBUND
SELF-LUBRICATING COMPOSITE FRICTION PART

(30) Priorité: 16.07.2014 FR 1456836
(43) Date de publication de la demande: 24.05.2017
(73) Titulaire: HYDROMECANIQUE ET FROTTEMENT, 42160 Andrézieux-Bouthéon (FR)
(72) Inventeur: MASSE, Emmanuel, Feurs 42110 (FR); BLANDENET, Olivier, F-38240 Meylan (FR)
(74) Mandataire: Santarelli
(86) Numéro de dépôt international: PCT/FR2015/051765
(87) Numéro de publication internationale: WO 2016/009124

(56) Documents cités:
- DE-A1- 19 915 348
- FR-A1- 2 997 146
- GB-A- 1 156 165
- US-A- 3 825 982
- US-A- 4 111 499
- US-A- 5 952 067
- US-B1- 6 264 369
- daniel A. Scola: "Polyimide resins", University of connecticut USA , 2012, XP002745647, Extrait de l'Internet: URL:https://polycomp.mse.iastate.edu/files /2012/01/7-Polyimide-Resins.pdf [extrait le 2015-10-08]

## Description

L'invention concerne une pièce composite de frottement autolubrifiante destinée à des applications sans mise en œuvre de lubrifiant entre cette pièce et une pièce antagoniste, présentant donc un faible coefficient de frottement avec cette dernière, et/ou impliquant des températures supérieures à 250°C et pouvant aller jusqu'à 300°C, voire 320°C en pointe. Une telle pièce de frottement peut être notamment une pièce d'articulation ou une glissière.

Pour satisfaire ce type de contraintes, il a déjà été proposé de revêtir la surface de la pièce mécanique au moyen de renforts imprégnés d'une résine formant une matrice, mais ces revêtements ne permettent pas d'obtenir un faible coefficient de frottement combiné à une bonne tenue aux hautes températures.

Ainsi, le document GB-1 439 030 décrit un revêtement de friction, notamment pour un palier, comportant une couche de frottement formée d'un tissage de cordons adjacents formés de fils à bas coefficient de frottement contenant une résine fluorocarbonée ; la surface de ces cordons présente des irrégularités, avec des saillies et des creux, et les fils et les cordons sont noyés dans une matière plastique. Les fils sont formés de fibres en un matériau, tel que PTFE, qui ne se lie pas chimiquement à une quelconque matière plastique ; ces fibres sont toutefois ancrées dans le revêtement précité ; les fibres de PTFE peuvent être mélangées à des fils de coton. Dans l'exemple décrit, le tissu s'étend hélicoïdalement en étant longé par un ensemble hélicoïdal de fibres de verre ; l'ensemble est noyé dans une résine époxy ou polyester. La couche formée de fibres de verre est plus épaisse que la couche formée de fils de PTFE. Notamment en raison de la nature de la résine utilisée en tant que matrice, on comprend qu'un tel revêtement ne peut guère résister en service à des températures de 200°C.

Aussi, il a été envisagé, dans le document JP-H0425669, d'activer la surface de fibres PTFE de manière à obtenir un accrochage des fibres au sein d'une matrice dans laquelle ces fibres sont mélangées à une concentration qui est à peine d'au plus 5%. Une telle configuration ne permet pas non plus d'obtenir une bonne tenue mécanique, à haute température, avec un faible coefficient de frottement.

Reprenant certains enseignements du document US ― 2 804 886, le document US ― 3 804 479 propose un autre type de couche de friction qui comporte des filaments de Teflon ^{®} et des filaments adhérents en Dacron ^{®} sont tissés d'une manière suffisamment lâche pour permettre une bonne imprégnation par une résine liquide ; cette couche est longée par un enroulement de bandes imprégnées d'une résine et chargées en fibres de verre. La présence des filaments adhérents en un matériau tel que le Dacron ^{®} implique que le revêtement ne peut supporter en service des températures de 200°C ou supérieures.

Le document US ― 4 666 318 divulgue un revêtement autolubrifiant destiné à des applications bien spécifiques dans le domaine aéronautique (faible pression et faibles amplitudes), formée d'une matière plastique contenant du PTFE, coopérant avec une pièce antagoniste ayant une rugosité d'au plus 0.50 microns CLA et une dureté d'au moins 1000VPN.

On connait, d'après le document US ― 4 111 499 (dont la publication remonte à 1978), un ensemble à palier et un patin (« liner ») pour des applications en températures extrêmes ; il comporte une matrice en résine polybutadiène contenant une dispersion aléatoire de particules autolubrifiantes, en polytétrafluoroéthylène, cette résine adhérant à un support. Un tel matériau est supposé résister à des températures comprises entre -75°C et 300°C (-100F à 500F). On connait en outre, d'après le document FR ― 2 997 146, un élément d'articulation autolubrifiant fonctionnant sous fortes charges en régime dynamique, réalisé à partir d'un enroulement d'un tissu de faible épaisseur comprise entre 20 et 150 microns et mélangé avec une résine comprenant des charges ; le tissu se présente sous forme de bandes de largeur comprise entre 5 mm et 200 mm, ces bandes étant croisées selon plusieurs couches.

On comprend que la détermination d'un revêtement de friction combinant un faible coefficient de frottement, une bonne tenue mécanique (notamment une bonne résistance à l'arrachement), et la capacité à conserver de bonnes propriétés de frottement et mécaniques jusqu'à des températures de service comprises entre 250°C et 300°C (voire jusqu'à 320°C en régime transitoire) implique de pouvoir, dans des conditions industriellement acceptables et pour un coût raisonnable, combiner une résine conservant une bonne tenue mécanique au-delà de 250°C tout en présentant une adhérence satisfaisante, y compris au-dessus de ce seuil de température, avec des éléments de renfort ayant un coefficient de frottement particulièrement bas, donc a priori peu adhérents à cette résine.

L'invention a pour objet de répondre à ce besoin.

Le document GB 1156165 A décrit un revêtement formé par au moins deux plis qui peuvent être fixés ensemble, le premier pli étant complètement noyé dans la matrice.

A cet effet, l'invention propose une pièce composite de frottement autolubrifiante pouvant être soumise en service à des températures au moins égales à 250°C, comportant, le long de la surface de frottement, une unique couche d'un tissu formé de fils de trame et de chaîne en polytétrafluoroéthylène, ce tissu étant imprégné d'une résine thermostable ayant une température de transition vitreuse au moins égale à 250°C, la couche unique étant obtenue par enroulement sur un mandrin d'une bande du tissu de façon hélicoïdale en assurant un contact bord à bord de la bande avec elle-même après chaque tour.

On peut noter que, contrairement aux solutions déjà proposées, l'invention enseigne de mettre en œuvre une unique couche d'un tissu dont les fils de chaîne et les fils de trame sont tous en polytétrafluoroéthylène (PTFE). Ainsi, l'invention préconise d'augmenter la section des fils constitutifs du tissu (là où les solutions connues les plus récentes tendaient à prévoir plusieurs couches fines), de manière à favoriser un bon ancrage par la résine et à n'utiliser que des fils de PTFE là où les solutions connues les plus récentes tendaient à combiner, dans un même tissu, des fils de PTFE à des fils différents, présentant une meilleure adhérence avec la résine. En fait, il est apparu que le fait de ne mettre en œuvre, dans la couche de protection de la surface de la pièce, qu'une seule couche de tissu de PTFE a l'avantage d'augmenter la résistance à l'arrachement, compte tenu de la continuité des fils dans toute l'épaisseur de cette couche de protection, tout en favorisant un bon ancrage de cette couche dans la résine à la faveur des espaces restant entre les fils du tissu.

On peut dire qu'un tel tissu est autolubrifiant.

Selon des caractéristiques avantageuses de l'invention :
- Le tissu est une armure formée de croisements de paires de fils de trame et de paires de fils de chaîne ; il peut notamment s'agir d'un sergé 2/2,
- Les fils de trame ou les fils de chaîne sont formés de fibres courtes liées les unes aux autres,
- Le tissu a une épaisseur d'au moins 0.10 mm, avantageusement d'au moins 0.30 mm, préférentiellement d'au moins 0.50 mm,
- Les fils de trame et les fils de chaîne ont un titrage d'au moins 100 dtex, préférentiellement d'au moins 400 dtex,
- La résine est un polyimide thermodurcissable,
- La pièce comporte en outre une couche de renforcement longeant le tissu à l'opposé de la surface de frottement, cette couche de renforcement étant imprégnée par la même résine que le tissu,
- La pièce constitue un palier ou un rail de guidage, parmi diverses applications possibles.

Le produit de l'invention est apparu avoir l'avantage d'être autolubrifiant en service, sous des températures supérieures à 250°C, pouvant aller jusqu'à 300°C en continu, voire 320°C en pointe, tout en ayant un coefficient de frottement très bas (compris entre 0.01 et 0.2) équivalent à celui du PTFE vierge (sans additif ou sans renfort) mais résistant à des charges supérieures à 40 N/mm².

L'invention propose par analogie un procédé de fabrication d'une pièce composite de frottement autolubrifiante du type précité selon lequel on forme une couche de tissu par enroulement hélicoïdal d'une bande de tissu formée de fils de trame et de fils de chaîne, tous constitués de polytétrafluoroéthylène, sur un mandrin selon un angle d'enroulement tel que la bande vienne bord à bord avec elle-même après chaque tour, on imprègne le tissu avec une résine thermostable ayant une température de transition vitreuse d'au moins 250°C. Cette résine est avantageusement un polyimide thermodurcissable.

Des objets, caractéristiques et avantages de l'invention ressortent de la description qui suit, donnée à titre d'exemple illustratif non limitatif, en regard du dessin annexé sur lequel :
- La figure 1 est une vue en perspective d'une pièce de frottement conforme à l'invention,
- La figure 2 est une vue d'un exemple préféré de tissage de la couche de frottement de cette pièce de frottement,
- La figure 3 est une vue en coupe de cette couche de frottement longée par une couche de renforcement, et
- La figure 4 est un schéma simplifié du procédé de formation d'une pièce de frottement telle que celle des figures 1 à 3.

Une pièce de frottement selon l'invention comporte essentiellement une couche de frottement ayant une surface libre S destinée à être opposée à une pièce antagoniste ; de manière avantageuse, cette pièce de frottement comporte en outre une couche de renforcement longeant la couche de frottement à l'opposé de la surface de frottement pour conforter la tenue mécanique de cette couche.

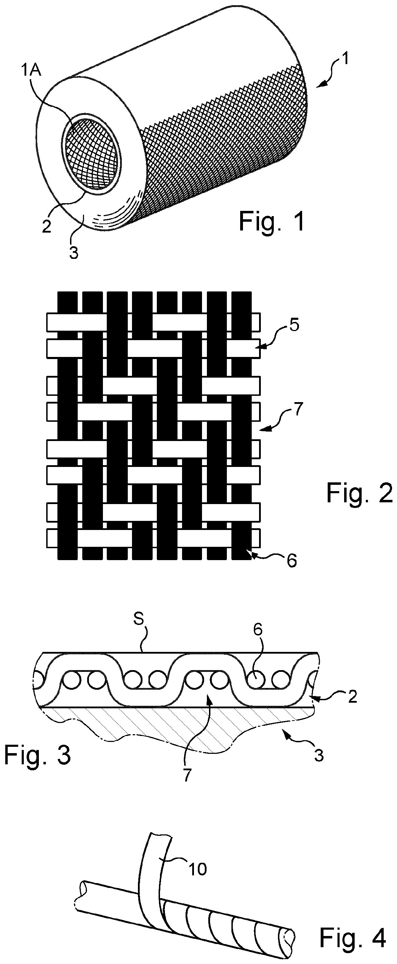

Dans l'exemple de la figure 1, la pièce de frottement est un palier 1 destiné à recevoir, dans son alésage longitudinal 1A, un arbre non représenté. En variante, il peut aussi s'agir d'une glissière recevant une tige en translation. La couche de frottement qui longe la surface de frottement (donc la surface interne) est désignée par la référence 2, tandis que la couche de renforcement est désignée par la référence 3. Cette couche 3 a ici une épaisseur sensiblement supérieure à celle de la couche de frottement ; en effet, la couche de frottement a en pratique une épaisseur de l'ordre d'au plus quelques millimètres (pas plus de 3 mm en pratique) tandis que la couche de renforcement peut avoir plusieurs millimètres, voire quelques centimètres d'épaisseur, en fonction des besoins. Il va toutefois de soi que la couche de renforcement, lorsqu'elle existe, peut avoir n'importe quelle épaisseur relative par rapport à la couche de frottement.

La couche de frottement a pour fonction de guider avec le moins de frottement possible la pièce antagoniste qu'est l'arbre précité tout en conservant son intégrité physique en service, le plus longtemps possible, y compris à des températures de service d'au moins 250°C en continu, et pouvant dépasser 300°C en pointe (par exemple jusqu'à de l'ordre de 320°C).

Pour ce faire, la couche de frottement consiste en une unique couche d'un tissu de fils en polytétrafluoroéthylène (ou PTFE) enrobée dans une matrice formée d'une résine thermostable ayant une température de transition vitreuse supérieure à la température maximale de service en continu, donc d'au moins 250°C, voire aussi proche que possible de 300°C.

La notion de polytétrafluoroéthylène ou PTFE désigne ici les diverses formes de ce composé, y compris la version expansée connue sous la désignation de « ePTFE ».

L'armure du tissu, c'est-à-dire la configuration relative des fils constitutifs de ce tissu, est choisie en sorte de former entre les divers fils des canaux de passage pouvant être remplis par la résine thermostable. On comprend en effet que, puisque le PTFE n'a pratiquement aucune adhérence avec les autres matériaux, l'ancrage du tissu dans la matrice ne peut se faire que par l'entremêlement des filaments irréguliers constitués par la résine remplissant les divers passages existant au travers du tissu, lesquels filaments se raccordent le long des fils de PTFE auprès de la surface de frottement.

On comprend qu'un compromis, dépendant des applications, est à trouver quant à la section et au nombre des passages de résine au travers du tissu ; plus ces passages sont nombreux et larges, meilleur est l'ancrage des fils en PTFE, mais moindre est la fraction de la surface de frottement qui est formée par des fils de PTFE. A l'inverse, plus la fraction de la surface de frottement formée de fils en PTFE est importante, meilleur est le comportement en frottement de la pièce de frottement, mais moindre est l'ancrage du tissu dans la matrice.

Il est apparu souhaitable qu'il y ait un passage pour de la résine à chaque croisement de fils de trame et de fils de chaîne.

Parmi les armures courantes, il est apparu qu'un sergé, et plus précisément un sergé 2/2 formé de l'entrelacement de paires de fils de trame et de paires de fils de chaîne, permettait la constitution entre les fils d'un réseau de canaux remplis de résine qui est suffisamment dense pour assurer un bon ancrage du tissu malgré l'absence d'adhérence entre les fils et la résine, tout en offrant à la pièce antagoniste une surface significative formée de PTFE.

Un tel sergé 2/2 est représenté aux figures 2 et 3, ou des fils de trame sont désignés sous la référence 5 et des fils de chaîne sont désignés sous la référence 6, en laissant libres des interstices 7 pour le passage de la résine, sous réserve que le tissage ne soit pas trop serré. Des bons résultats ont été obtenus avec un sergé 2/2

De manière encore plus avantageuse, les fils de trame et de chaîne sont chacun formés d'un unique filament formé de fibres de PTFE liées les unes aux autres par torsion, ce qui signifie que les filaments, et donc les fils de trame et de chaîne, ont une surface irrégulière qui contribue au bon ancrage du tissu dans la matrice.

De bons résultats ont été obtenus avec un tel tissage de monofilaments formés de fibres de diamètre moyen de 0.1 à 0.14 mm.

Ces monofilaments ont de préférence un titrage de plus de 400 dtex ; avantageusement au moins 750 dtex ; des essais très satisfaisants ont été obtenus avec des monofilaments de 833 dtex.

En variante, le tissu est formé de fils formés chacun de plusieurs filaments, continus ou formés de fibres courtes comme dans l'exemple précité ; dans un tel cas, le titrage des filaments peut être plus faibles, par exemple de l'ordre de 350 à 450 dtex pour des fils bifilaments, voire moins. Le tissage peut se faire par assemblage de fils de deux ou trois bouts, avec ou sans torsion.

Selon encore une autre variante, la surface des filaments est volontairement rendue irrégulière, par exemple par formation de micro-entailles.

L'épaisseur du tissu est d'au moins 0.30 mm, voire d'au moins 0.5 mm ; des valeurs allant au-delà d'un millimètre sont envisageables ; cela permet de déterminer la section des fils à utiliser. Les fils de trame et les fils de chaîne sont avantageusement identiques. Leur section est, dans l'exemple considéré aux figures 2 et 3, celle d'un disque. En variante non représentée, cette section est rectangulaire, avec par exemple un facteur de forme (rapport entre la dimension la plus grande et la dimension la plus petite) qui est de préférence d'au moins 2.

La résine thermostable est avantageusement choisie parmi les polyimides thermodurcissable, les résines à base de cyanate ester ou parmi les polyetherketones (polyetheretherkétone - PEEK, ou polyetherketoneketone - PEKK, notamment). Ces résines ont au minimum des températures de transition vitreuse supérieures à 280°C. Parmi les polyimides thermodurcissables, on peut citer les polybismaléimides ― ou BMI.

Il n'est pas apparu utile d'intégrer une charge dans la résine thermostable.

Puisque la couche de renforcement, lorsqu'elle existe, a pour fonction de forcer la couche de frottement à conserver sa forme malgré la pression appliquée entre la pièce de frottement et la pièce antagoniste y compris à haute température, on comprend qu'il est avantageux que cette couche de renforcement soit constituée d'un matériau ayant un coefficient de dilatation thermique très faible, typiquement au plus égal à 13.10⁻⁶ K⁻¹ (correspondant à de l'acier) ; il est à la portée de l'homme de métier de définir la géométrie et la constitution de cette couche de renforcement en fonction des besoins. Il peut notamment s'agir de fils ou de fibres de carbone, de verre ou d'aramide, libres ou regroupés en un tissu (on parle parfois de roving).

Le tissu de la couche de frottement est avantageusement disponible en une bande, ce qui confère une grande liberté pour conformer la couche de frottement en utilisant, si nécessaire, une ébauche dont le profil est le négatif de la forme de la surface de frottement à obtenir. La largeur de la bande peut être choisie en fonction des besoins ; elle est avantageusement choisie entre 5 mm et 2 m, par exemple entre 1 cm et 10 cm, de préférence entre 1.5 cm et 3 cm.

Dans le cas précité où la pièce de frottement est un palier, sa fabrication peut commencer par l'enroulement d'une telle bande de tissu autour d'un mandrin dont le diamètre extérieur est égal au diamètre intérieur du palier à réaliser ; la bande est enroulée de manière hélicoïdale de manière à assurer un contact bord à bord des spires successives formées sur le mandrin (voir la figure 4). On comprend que la largeur de la bande 10 conditionne l'inclinaison des fils de trame et des fils de chaîne par rapport à l'axe du mandrin et donc du futur palier. En effet, les fils de trame et les fils de chaîne sont disposés longitudinalement et transversalement à la bande de tissu, respectivement.

On comprend qu'une continuité d'à la fois les fils de trame et les fils de chaîne dans la couche de frottement contribue à la conservation d'une bonne intégrité au cours de la vie en service du palier ; une inclinaison de 40° à 60° pour ces fils, par rapport à l'axe longitudinal du palier est apparue être favorable à cet effet. Dans le cas d'un enroulement bord à bord et de plus d'un tissu (et non d'un fil), il est préférable d'avoir un enroulement suivant un angle compris entre 65° et 89°.

La couche de renforcement peut être formée par enroulement d'un fil de carbone ou de verre, ou de toute autre matière appropriée, avec un angle d'inclinaison qui est apparu pouvoir être quelconque. Dans le cas d'enroulements de fils, l'angle optimal semble compris entre 40° et 60°, mais cet angle peut varier suivant les applications et les caractéristiques mécaniques voulues.

La bande de tissu, d'une part, et le fil de la couche de renforcement, d'autre part, sont avantageusement préalablement imprégnés par une résine thermostable ; on comprend toutefois que, si la couche de renforcement est formée en utilisant la même résine que pour la couche de frottement, un traitement thermique ultérieur peut contribuer à rendre les matrices solidaires l'une de l'autre.

Selon un aspect non revendiqué, au lieu d'être formé d'un enroulement d'une bande, le tissu de PTFE est en variante constitué d'une gaine tubulaire tressée.

On comprend aisément que, pour une pièce de frottement du type glissière, la couche de frottement peut être simplement formée par la fixation du tissu précité à une couche de renforcement sous-jacente.

A titre d'exemple, un palier de frottement a été formé de la manière suivante.

Un tissu de PTFE de 0.3 mm d'épaisseur a été choisi avec une armure de sergé 2/2, sous la forme d'une bande de 3 cm de large. Cette bande a été plongée dans un bain d'imprégnation, maintenu à 110°C, contenant une résine thermostable de type polybismaléimide (BMI) ayant une température de transition vitreuse de 285°C.

Cette bande imprégnée a été enroulée sur un mandrin en veillant à recouvrir la totalité de la surface du mandrin sans recouvrement entre les spires successives, c'est-à-dire de manière à former une couche unique continue sur la totalité de la surface du mandrin qui était destinée à former un palier (ou une pluralité de paliers). De manière avantageuse, le mandrin a été lui aussi maintenu à la température du bain d'imprégnation.

On a ensuite enroulé un fil de verre epoxy préalablement imprégné de la même résine (on parle de filament de verre type roving).

Le cycle de polymérisation suivi a comporté un traitement de 4h (une durée plus longue est possible) à 170°C, un démoulage, un traitement complémentaire de cuisson de 4h (une durée plus longue est possible) à une température comprise entre 230°C et 250°C.

Il a été constaté qu'il était difficile de couper les fibres PTFE lors d'un traitement ultérieur d'usinage, ce qui confirme la bonne tenue à l'usure de l'ensemble.

Des essais tribologiques ont été effectués dans les conditions suivantes :
- Oscillation de l'axe d'amplitude : 100°.
- Pression projetée : 80 MPa.
- Vitesse moyenne : 8 mm/s
- PV moyen (pression × vitesse): 0.64 MPa.m/s.
- Jeu initial arbre/palier : entre 0.1 et 0.2mm.
- Dimensions palier : Øint 30 × Øext 36 × Lg 20.
- Graissage initial : Sans
- Axe antagoniste des solutions testées. : 16 NC 6 cémenté trempé
- Durée essai maxi : 1 mois (350 000 cycles)
- Température ambiante

Alors qu'une augmentation du coefficient de frottement a été constatée avec un palier connu (formé à partir d'un tissu de polyester enrobé dans une résine chargée en PTFE, ou d'un tissu formé de fils de polyester et de fils PTFE à moins de 50% au maximum en PTFE), jusqu'à 0.04, voire 0.08, le coefficient de frottement pour le palier de l'invention est apparu rester sensiblement constant à une valeur d'à peine 0.02 jusqu'à 350 000 cycles.

En surveillant l'évolution de la température au centre de l'axe de la pièce antagoniste, on a constaté que cette température augmentait jusqu'à près de 50°C, voire 60°C avec le palier connu, la température restait en-deçà de 40°C avec un palier conforme à l'invention ; cela traduit bien que l'énergie à dissiper avec un palier conforme à l'invention est moindre qu'avec un palier connu.

Pourtant, on a constaté une usure générale du palier de l'invention qui est supérieure à celles du palier connu, alors que la pièce antagoniste a été très peu usée ; on peut toutefois supposer que cette usure n'est qu'apparente, traduisant en fait l'existence d'un phénomène d'écrasement de la couche de frottement sous la pression de contact appliquée.

Le palier selon l'invention a en outre été testé dans les conditions suivantes :
- oscillation de l'axe d'amplitude : 100°.
- pression projetée : 80 MPa.
- vitesse moyenne : 8 mm/s
- PV moyen: 0.64 MPa.m/s.
- Jeu initial arbre/palier : entre 0.1 et 0.2mm.
- Dimensions palier : Øint 30 × Øext 36 × Lg 20.
- Graissage initial : Sans
- Axe antagoniste des solutions testées : 16 NC 6 cémenté trempé
- Durée essai maxi : 1 mois (350 000 cycles)
- Température variant de 50° à 280°C (environnement) - il a été difficile de maintenir la température constante pendant les paliers de température

Le coefficient de frottement est apparu rester sensiblement constant malgré les passages à 280°C.

Ces tests établissent que le palier conforme à l'invention combine bien un très faible coefficient de frottement et une bonne tenue à la température jusqu'au-delà de 250°C, dans la plage 250°C-280°C.

## Revendications

1. Pièce composite de frottement autolubrifiante pouvant être soumise en service à des températures au moins égales à 250°C, comportant, le long de la surface de frottement, une unique couche d'un tissu formé de fils de trame et de chaîne en polytétrafluoroéthylène, ce tissu étant imprégné d'une résine thermostable ayant une température de transition vitreuse au moins égale à 250°C, **caractérisée en ce que** la couche unique est obtenue par enroulement sur un mandrin d'une bande du tissu de façon hélicoïdale en assurant un contact bord à bord de la bande avec elle-même après chaque tour.

2. Pièce selon la revendication 1, dont le tissu est une armure formée de croisements de paires de fils de trame et de paires de fils de chaîne.

3. Pièce selon la revendication 1 ou la revendication 2, dans laquelle les fils de trame ou les fils de chaîne sont formés de fibres courtes liées les unes aux autres.

4. Pièce selon l'une quelconque des revendications 1 à 3, dont le tissu a une épaisseur d'au moins 0.10 mm.

5. Pièce selon la revendication 4, dont le tissu a une épaisseur d'au moins 0.5 mm.

6. Pièce selon l'une quelconque des revendications 1 à 5, dont les fils de trame et les fils de chaîne ont un titrage d'au moins 100 dtex.

7. Pièce selon l'une quelconque des revendications 1 à 4, dans laquelle la résine est un polyimide thermodurcissable.

8. Pièce selon l'une quelconque des revendications 1 à 5, comportant en outre une couche de renforcement longeant le tissu à l'opposé de la surface de frottement, cette couche de renforcement étant imprégnée par la même résine que le tissu.

9. Pièce selon l'une quelconque des revendications 1 à 8, constituant un palier.

10. Pièce selon l'une quelconque des revendications 1 à 8, constituant un rail de guidage.

11. Procédé de fabrication d'une pièce composite de frottement autolubrifiante selon l'une quelconque des revendications 1 à 10, selon lequel on forme une couche de tissu par enroulement hélicoïdal d'une bande de tissu formée de fils de trame et de fils de chaîne, tous constitués de polytétrafluoroéthylène, sur un mandrin selon un angle d'enroulement tel que la bande vienne bord à bord avec elle-même après chaque tour, on imprègne le tissu avec une résine thermostable ayant une température de transition vitreuse d'au moins 250°C.

12. Procédé selon la revendication 11, selon lequel la résine est un polyimide thermodurcissable.

## Patentansprüche

1. Selbstschmierendes Reibungsteil aus Verbundwerkstoff, das im Betrieb Temperaturen von mindestens 250°C ausgesetzt werden kann und entlang der Reibungsfläche eine einzige Schicht eines Gewebes aus Schuss- und Kettfäden aus Polytetrafluorethylen aufweist, wobei das Gewebe mit einem thermostabilen Harz mit einer Glasübergangstemperatur von mindestens 250°C imprägniert ist, **dadurch gekennzeichnet, dass** die einzelne Schicht durch schraubenförmiges Aufwickeln eines Gewebestreifens auf einen Dorn erhalten wird, wobei nach jeder Umdrehung ein Kontakt des Streifens mit sich selbst von Kante zu Kante sichergestellt wird.

2. Teil nach Anspruch 1, dessen Gewebe eine Armierung ist, die durch Kreuzungen von Schussfadenpaaren und Kettfadenpaaren gebildet wird.

3. Teil nach Anspruch 1 oder Anspruch 2, wobei die Schuss- oder Kettfäden aus kurzen, miteinander verbundenen Fasern bestehen.

4. Teil nach einem der Ansprüche 1 bis 3, dessen Gewebe eine Dicke von mindestens 0,10 mm aufweist.

5. Teil nach Anspruch 4, dessen Gewebe eine Dicke von mindestens 0,5 mm aufweist.

6. Teil nach einem der Ansprüche 1 bis 5, dessen Schuss- und Kettfäden eine Feinheit von mindestens 100 dtex aufweisen.

7. Teil nach einem der Ansprüche 1 bis 4, wobei das Harz ein wärmehärtendes Polyimid ist.

8. Teil nach einem der Ansprüche 1 bis 5, ferner umfassend eine Verstärkungsschicht, die entlang des Gewebes gegenüber der Reibungsfläche verläuft, wobei die Verstärkungsschicht mit demselben Harz wie das Gewebe imprägniert ist.

9. Teil nach einem der Ansprüche 1 bis 8, das ein Lager bildet.

10. Teil nach einem der Ansprüche 1 bis 8, das eine Führungsschiene bildet.

11. Verfahren zur Herstellung eines selbstschmierenden Reibungsteils aus Verbundwerkstoff nach einem der Ansprüche 1 bis 10, bei dem eine Gewebeschicht durch schraubenförmiges Aufwickeln eines Gewebestreifens aus Schuss- und Kettfäden, die alle aus Polytetrafluorethylen bestehen, auf einen Dorn mit einem solchen Wickelwinkel gebildet wird, dass der Streifen nach jeder Umdrehung mit sich selbst Kante an Kante kommt, wobei das Gewebe mit einem thermostabilen Harz mit einer Glasübergangstemperatur von mindestens 250°C imprägniert wird.

12. Verfahren nach Anspruch 11, wobei das Harz ein wärmehärtendes Polyimid ist.

## Claims

1. Self-lubricating composite friction part being able to be subjected in operation to temperatures at least equal to 250°C, comprising, along the friction surface, a single layer of a fabric formed by weft and warp strands of polytetrafluoroethylene, this fabric being impregnated with a heat-stable resin having a glass transition temperature at least equal to 250°C, **characterized in that** the single layer is formed by the winding on a mandrel of a strip of fabric in a helical manner such that the strip comes edge-to-edge with itself after each turn.

2. Part according to claim 1, the fabric of which is a weave formed by crossings of pairs of weft strands and of pairs of warp strands.

3. Part according to claim 1 or claim 2, in which the weft strands or the warp strands are formed by short fibres linked to one another.

4. Part according to any one of claims 1 to 3, the fabric of which has a thickness of at least 0.10 mm.

5. Part according to claim 4, the fabric of which has a thickness of at least 0.5 mm.

6. Part according to any one of claims 1 to 5, the weft strands and the warp strands of which have a count of at least 100 dtex.

7. Part according to any one of claims 1 to 4, in which the resin is a thermosetting polyimide.

8. Part according to any one of claims 1 to 5, comprising moreover a reinforcing layer bordering the fabric opposite the friction surface, this reinforcing layer being impregnated with the same resin as the fabric.

9. Part according to any one of claims 1 to 8, constituting a bearing.

10. Part according to any one of claims 1 to 8, constituting a guide rail.

11. Method for manufacture of a self-lubricating composite friction part according to any one of claims 1 to 10, according to which a layer of fabric is formed by helical winding of a strip of fabric formed by weft strands and warp strands, all constituted by polytetrafluoroethylene, on a mandrel according to a winding angle such that the strip comes edge-to-edge with itself after each turn, the fabric is impregnated with a heat-stable resin having a glass transition temperature of at least 250°C.

12. Method according to claim 11, according to which the resin is a thermosetting polyimide.
